# EUROPEAN PATENT APPLICATION

(11) **EP 1 383 019 A1**
(43) Date of publication of application: **21.01.2004**
(21) Application number: 03015900.8
(22) Date of filing: 11.07.2003
(51) Int. Cl.: G05B 19/418, B25J 9/16

(54) **Method and system for teleoperating a robot**

(30) Priority: 15.07.2002 JP 2002205681
(71) Applicant: KAWASAKI JUKOGYO KABUSHIKI KAISHA, Chuo-ku, Kobe-shi, Hyogo-ken (JP)
(72) Inventor: Hiratsuka, Mitsuichi, Kobe-shi, Hyogo-ken (JP); Onoue, Kazuhiko, Kobe-shi, Hyogo-ken (JP); Saiki, Akiyoshi, Kobe-shi, Hyogo-ken (JP); Sawai, Tsuneyoshi, Akashi-shi, Hyogo-ken (JP)
(74) Representative: Grosse, Wolfgang, Dipl.-Ing.

(57) **Abstract**

A remote control method of remote controlling a robot controller (1) through a universal communication network (8) by a terminal (2) disposed remote from the robot controller, includes: enabling the terminal (2) to remote control the robot controller (1) by a functional connecting device (3) which is disposed on a side of the robot controller (1), the functional connecting device (3) being capable of enabling the terminal (2) to remote control the robot controller (1) through the universal communication network (B); and performing a predetermined operation on the robot controller (1) by the terminal (2).

## Description

### BACKGROUND OF THE INVENTION

### Field of the Invention

The present invention relates to a remote control method of controlling a robot controller and a remote control system for carrying out the remote control method. More specifically, the present invention relates to a remote control method of remote controlling a robot controller through a universal and ubiquitous network, such as the Internet, in an interactive mode, and a remote control system for carrying out the remote control method.

### Description of the Related Art

A known remote monitoring and controlling system for monitoring and controlling a robot controller monitors the condition of the robot controller through a communication line connected to the robot controller and controls the robot controller for desired operations. When a trouble occurs in the robot controller, an operator is able to eliminate the cause of the trouble by operating the robot controller through the communication line in a remote control mode instead of in a direct control mode.

Since this known remote monitoring and controlling system uses a special device and a special communication line for monitoring and controlling the robot controller, the remote monitoring and controlling system is expensive. Moreover, the operator is able to monitor and control the robot controller only at a place where the remote monitoring and controlling system is installed. Accordingly, the remote monitoring and controlling system has low flexibility of operation.

The Internet has rapidly developed in recent years and it has become quite common for many people to access, for example, WWW servers stationed in all parts of the world by means of domestic and office personal computers and to browse and acquire various pieces of information by means of a WWW browser. The operator's flexibility of operation of the remote control system will be remarkably improved if the robot controller can be remote monitored and controlled by using a general-purpose computer connected to a worldwide communication network, such as the Internet.

However, the HTTP, for instance, employed as a standard protocol for WWW in the Internet is designed on the assumption that many unspecific clients (computers) access one server, and is not intended to guarantee continuous one-to-one communication. Therefore, it is difficult to control the robot controller through the Internet in a situation where data must be acquired from the robot controller and an interactive operation must be performed to send instructions to the robot controller to change the condition of the robot controller. (Refer to JP2000-259536A for more information about monitoring and controlling systems using the Internet.)

### SUMMARY OF THE INVENTION

The present invention has been made in view of the forgoing circumstances and it is therefore an object of the present invention to provide a remote control method and a remote control system for remote controlling a robot controller through a universal network, such as the Internet, by a terminal disposed remote from the robot controller.

Incidentally, the term, "terminal disposed remote from the robot controller" signifies a terminal disposed near the robot controller and connected to the robot controller through a universal communication network and capable of controlling the robot controller as well as a terminal actually disposed remote from the robot controller.

According to the present invention, a remote control method of remote controlling a robot controller through a universal communication network by a terminal disposed remote from the robot controller, comprises: enabling the terminal to remote control the robot controller by a functional connecting device which is disposed on a side of the robot controller, the functional connecting device being capable of enabling the terminal to remote control the robot controller through the universal communication network; and performing a predetermined operation on the robot controller by the terminal.

Preferably, the step of enabling the terminal to remote control the robot controller is executed by sending a connect program from the functional connecting device to the terminal in response to a request made by the terminal.

Preferably, the remote control method further comprises a step of converting information of a format sent from the terminal to the robot controller into information of another format that can be processed by the robot controller by the functional connecting device.

Preferably, the step of performing the predetermined operation is executed by retrieving desired information from the robot controller through the functional connecting device by the terminal.

Preferably, operations performed by the terminal on the robot controller are limited.

Preferably, information retrievable from the robot controller by the terminal is limited.

According to the present invention, a remote control system for remote controlling a robot controller through a universal communication network by a terminal disposed remote from the robot controller, comprises: a functional connecting device disposed on a side of the robot controller, the functional connecting device being capable of enabling the terminal to remote control the robot controller through the universal communication network, the terminal performing a predetermined operation on the robot controller.

Preferably, the functional connecting device is provided with a connect program, the connect program being sent to the terminal in response to a request made by the terminal.

Preferably, the functional connecting device is capable of converting information of a format sent from the terminal to the robot controller into information of another format that can be processed by the robot controller.

Preferably, the terminal retrieves desired information from the robot controller through the functional connecting device by the predetermined operation.

Preferably, operations performed by the terminal on the robot controller are limited.

Preferably, information retrievable from the robot controller by the terminal is limited.

Preferably, functional connecting device is included in the robot controller.

Since the present invention is constituted as mentioned above, the robot controller can be remote controlled from a desired place by a system of simple configuration.

### BRIEF DESCRIPTION OF THE DRAWINGS

The above and other objects, features and advantages of the present invention will become more apparent from the following description taken in connection with the accompanying drawings, in which:
Fig. 1 is a block diagram of a remote control system in a preferred embodiment according to the present invention for carrying out a remote control method according to the present invention for controlling a robot controller;
Fig. 2 is a block diagram of assistance in explaining a connecting procedure included in the remote control method of the present invention; and
Fig. 3 is view of assistance in explaining an operation for controlling a robot controller by the remote control method of the present invention.

### DESCRIPTION OF THE PREFERRED EMBODIMENTS

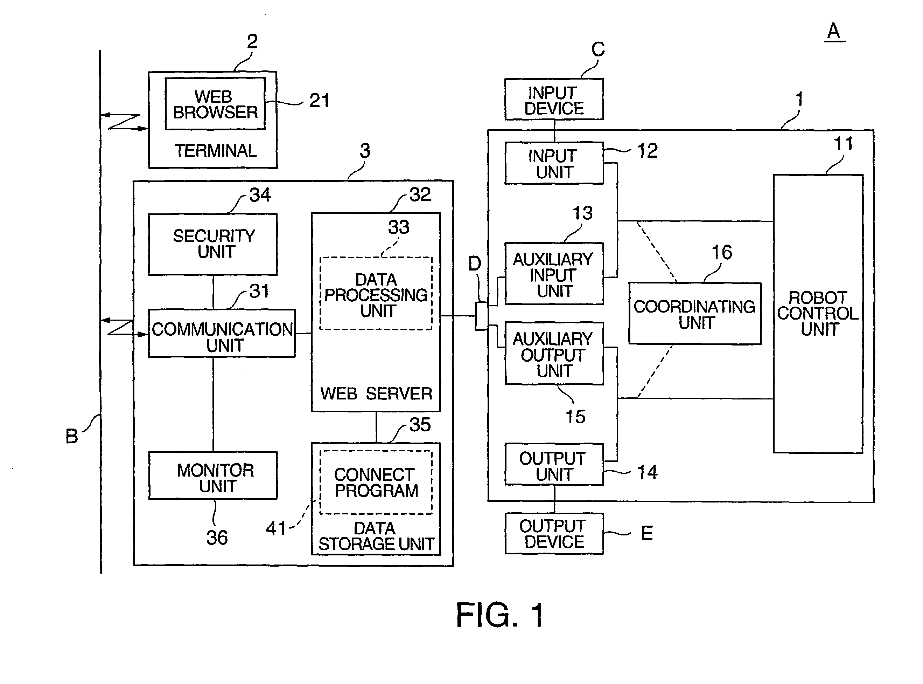

Fig. 1 shows a remote control system A for carrying out a remote control method in a preferred embodiment according to the present invention. The remote control system A, similarly to a robot control system that controls a robot controller through an input/output unit included in the robot controller, controls the robot controller 1 through a universal communication network B (hereinafter referred to simply as "network B"), such as a LAN (local area network) in an interactive mode.

The remote control system A comprises, as principal components, a terminal 2 and a functional connecting device 3 connecting the terminal 2 through the network B to the robot controller 1.

The robot controller 1 comprises a robot control unit 11, an input unit 12, i.e., an input interface, for giving signals representing operations of an input device C including a keyboard and a mouse to the robot control unit 11, an auxiliary input unit 13, i.e., an input interface, for giving signals received through a communication port D to the robot control unit 11, an output unit 14, i.e., an output interface, for sending signals provided by the robot control unit 11 to an output unit E including a display and a printer, an auxiliary output unit 15, i.e., an output interface, for sending out signals provided by the robot control unit 11 through the communication port D, and a coordinating unit 16 for coordinating signal exchange between the input units 12 and 13 and the output units 14 and 15, and the robot control unit 11.

The robot control unit 11 executes principal robot control operations including generation of command signals designating rotary motions of the components of a robot manipulator, not shown, about axes of turning.

The input unit 12 gives text data provided by the input device C, work request commands and data request command (hereinafter referred to simply as "commands") to the robot control unit 11.

The auxiliary input unit 13 gives data and commands, which are input from the communication port D and have the same format as those input by the input unit 12 and the robot control unit 11, to the robot control unit 11.

The output unit 14 gives data provided by the robot control unit 11 in response to commands given by the input unit 12 and the auxiliary input unit 13 to the output unit E.

The auxiliary output unit 15 sends out data provided by the robot control unit 11 through the communication port D in response to commands given thereto by the input unit 12 and the auxiliary input unit 13.

The communication port D is such as generally employed in conventional robot controllers to connect the robot controller 1 to an external device, such as a programmable logic controller (PLC).

The terminal 2 is, for example, a personal computer. The terminal 2 is loaded with a web browser (hereinafter referred to as "browser") 21, such as the Internet Explorer (registered trademark) or the Netscape Navigator (registered trademark), that enables the operator of the terminal 2 to retrieve information that is available on the network B.

The functional connecting device 3 includes a communication unit 31 connected to the network B and serving as an interface for communication through the network B, a web server (hereinafter referred to as "server") 32, such as the Internet Information Server (registered trademark), that sends out data in response to request made by the browser 21 and received by the communication unit 31, a data processing unit 33 serving as a CGI (Common Gateway Interface) program for the server 32, a security unit 34 that carries out various processes to ensure the security of communication through the network B, a data storage unit 35 storing data to be sent to the browser 21 by the server 32, a monitor unit 36 that monitors the condition of the robot controller 1, for example, by automatically sending a mail to the terminal to notify the user of the malfunction of the robot controller 1 when the robot controller 1 generates an error signal.

The CGI program is such a program (gateway) as prepared beforehand at the server so that the web server executes a predetermined process in response to request made by the web browser.

The data processing unit 33 receives information, such as data and commands, described, for example, in the HTML (Hypertext Markup Language) provided by the terminal 2 through the communication unit 31, converts the HTML information into text data that can be processed by the robot controller 1, and sends the text data through the communication port D to the robot controller 1. The data processing unit 33 converts information, such as data and commands, received through the communication port D from the robot controller 1 into information of a format that can be sent to the browser 21, such as HTML data and commands, and gives the HTML data and commands to the communication unit 31.

The security unit 34 carries out various processes to see if the terminal 2 accessed the server 32 through the network B is authorized to operate the robot controller 1. More concretely, the security unit 34 requests entering a password by a connecting process to see if the terminal 2 accessed the server 32 is authorized to operate the robot controller 1.

Reference is made for the IP address of the terminal 2 that has made an access to the server 32. IP addresses are allocated respectively to terminals that are permitted to control the robot controller 1. Security may be ensured by using the password that authorizes the terminal 2, and the IP address of the terminal 2 in combination. Although the use of the password and the IP address in combination may reduce the flexibility of operation, there would not be substantial reduction of the flexibility of operation because the IP addresses of all the personal computers that are expected to be used as terminals can be registered. Thus, the cost of the remote control system A is far less than that of a remote control system that needs a plurality of special terminals and a plurality of special communication lines.

Ranges of executable operations may be determined respectively for the types of passwords; that is, each terminal 2 may be authorized to execute limited operations and to retrieve limited information from the robot controller 1. Thus, the unexpected operations of the robot can be avoided.

The data storage unit 35 holds web page data to be displayed on the screen of the terminal 2 by the browser 21 when the browser 32 accesses the server 32, and a connect program 41.

The connect program 41 is, for example, a Java applet that is downloaded from the server 32 by the browser 21 when requested by the browser 21 to remote control the robot controller 1 by the terminal 2 and is a program that executes a connect process for connecting the browser 21 to the server 32 to enable the control of the robot controller 1 by the terminal 2 in an interactive mode.

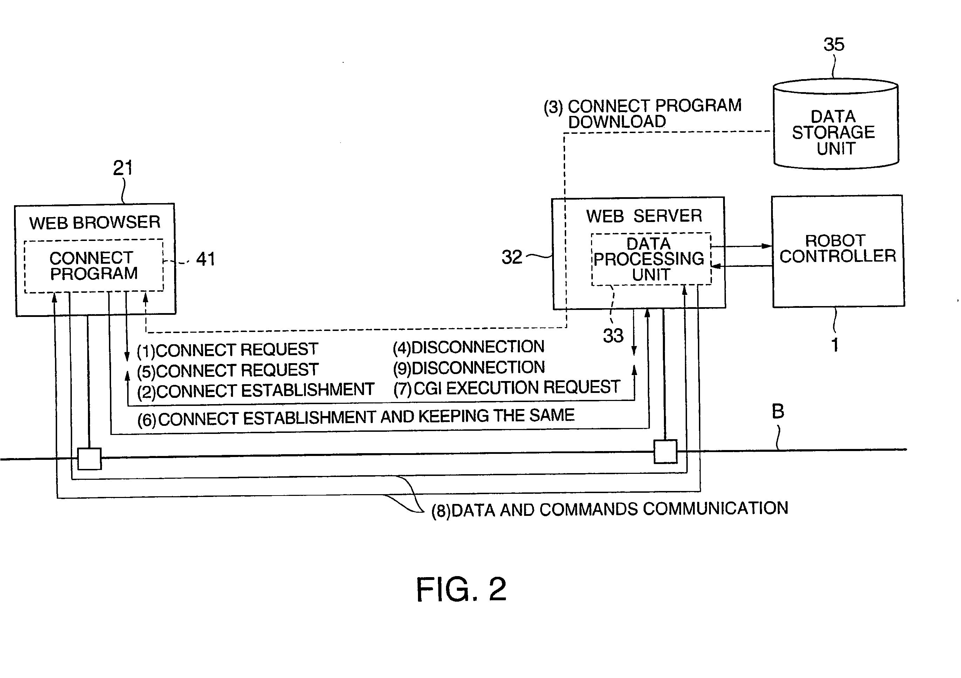

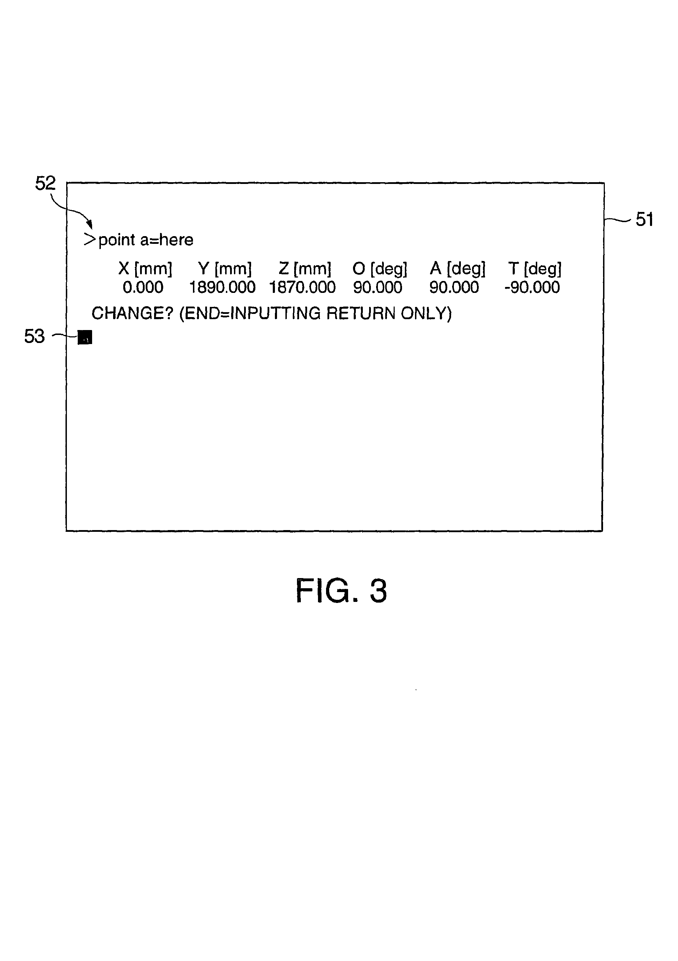

A connect procedure for connecting the terminal 2 to the robot controller 1 by the connect program 41 will be described hereinafter with reference to Fig. 2.
(1) The browser 21 sends a connect request through the network B to the server 32.
(2) The server 32 establishes connection with the browser 21 in response to the connect request made by the browser 21. The browser 21 and the server 32 communicate with each other according to, for example, the HTTP (the Hypertext Transfer Protocol).
(3) A request is made by the GET method of the HTTP for the server 32 to send the connect program 41 to the browser 21 when the operator enters the password and specifies the URL (the Uniform Resource Locator) describing a control picture 51 (Fig. 3) in the browser.
(4) The server 32 retrieves the connect program 41 from the data storage unit 35 and sends the same to the browser 21. After the connect program 41 has been sent to the browser 21, the browser 21 is disconnected from the server 32.
(5) The browser 21 executes the connect program 41 to send a connect request to the server 32.
(6) The server 32 establishes connection between the browser 21 and the server 32 in response to the connect request made by the browser 21. The browser 21 has no relation to connection established by the connect program 41. The connect program 41 keeps the connection of the server 32 and the browser 21 while the operator controls the robot controller on the control picture 51.
(7) The connect program 41 makes a request to the server 32 for making the data processing unit 33 execute the CGI (the Common Gateway Interface).
(8) The data processing unit 33 is actuated in response to the request made by the connect program 41, and the data processing unit 33 changes the formats of data and commands exchanged between the terminal 2 and the robot controller 1 to control the robot controller 1.
(9) When the operator specifies anther URL different from the control picture 51 on the browser 21 after the completion of control operations for controlling the robot controller 1, the connect program 41 is ended and the server 32 and the browser 21 are disconnected from each other.

Description will be made about a procedure for carrying out predetermined operations through the remote control of the robot controller 1 by the terminal 2 with reference to Fig. 3 showing, by way of example, the control picture displayed on the screen of the terminal 2.

The "predetermined operations" are the same as those to be executed for the direct control of the robot controller 1. For example, the predetermined operations include (1) operations for setting and changing matters for the robot, such as those for setting a base matrix, setting a tool matrix, setting load, setting operation parameters, selection of effective/ineffective optional functions and setting system switch, (2)operations for gathering logs including an error log and an operation log, (3) operations for confirming the operating status of the robot including the number of cycles of execution of operation programs, a program step currently executed, and the speed and accuracy of operations, (4) operations for the confirmation and edition of operation programs and taught positions, (5) operations for the confirmation of the current positions of robot components (axes and XYZOAT indicating tool position and orientation), currents supplied to motors, values indicated by encoders and speed of joints, (6) operation for confirming and changing the contents of the internal storage devices of the robot, and (7) operations for saving and loading operation programs and robot data.

Although operations to be executed by the robot controller 1 include operations for teaching the robot and executing operations, those operations are excluded from the predetermined operations because it is desirable to perform those operations directly on the robot.

As shown in Fig. 3, when it is desired to edit teaching data set for the robot controller 1 by the terminal 2, a command 52, "point a = here" for acquiring teaching data from the control unit 11 is entered. Then, values of the parameters X, Y and Z indicating the location of the tool, and values of the parameters O, A and T indicating the orientation of the tool are displayed, and the robot controller 1 (control unit 11) makes a cursor 53 flicker to indicate a wait state for waiting input to change those values of the parameters.

In the aforesaid example, information acquired by the terminal 2 is teaching data. Information acquired from the robot controller 1 is not limited to the aforesaid information and may be properly changed according to operations made by the terminal 2.

For example, (1) information for the confirmation of the operating status and an operation log are acquired to confirm the operating condition of the robot, and (2) information about an error log, an operation program data on a taught position, set values and contents of the internal memory is acquired to cope with the malfunction of the robot.

If communication is performed on the HTTP, the robot controller 1 is disconnected upon the completion of sending teaching data, and the robot controller 1 is not maintained in a waiting state. However, since the remote control system A maintains connection by the connect program 41, the controller 1 is held in an input wait state.

The terminal 2 is disconnected from the robot controller 1 upon the end of the access of the browser 21 to the server 32 and the end of the connect program 41.

For example, when the server 32 is provided with the connect program 41 as a Java applet, and the browser 21 of the terminal 2 accesses the server 32 through the network B to control the robot controller 1 in the remote control system A, the connect program 41 is down-loaded to the browser 21 and the connect program 41 is executed to establish and maintain connection for controlling the robot controller 1 by the terminal 2, and the data format of exchanged data is changed by the data processing unit 33 provided with the CGI program so that the terminal 2 and the robot controller 1 are able to communicate with each other. Thus, all the terminals 2 loaded with the web browser and connected to the network B for communication are able to control the robot controller 1 in an interactive mode in a manner similar to that by which the terminals 2 control the robot controller 1 by exchanging information with the robot controller through the input device C and the output device E connected to the robot controller 1.

Since the functional connecting device 3 of the remote control system A is connected to the communication port D, which usually is included in the existing robot controllers, the remote control system A is able to control a conventional robot controller without requiring any particular modification of the conventional robot controller. A connecting device functionally equivalent to the functional connecting device 3 may be connected to a bus connected to the communication port D instead of connecting the functional connecting device to the communication port D, and the connecting device may be installed in the case of the robot controller 1.

As apparent from the foregoing description, the remote control system according to the present invention is simple in configuration and enables a terminal disposed remote from the robot controller to control the robot controller.

According to the present invention, the functional connecting device of the remote control system converts the information sent from the terminal to the robot controller into that of a format that can be processed by the robot controller. Thus, there is no restriction on the language used by the terminal, which further simplifies operations for the remote control of the robot controller.

Although the invention has been described in its preferred form with a certain degree of particularity, obviously many changes and variations are possible therein. It is therefore to be understood that the present invention may be practiced otherwise than as specifically described herein without departing from the scope and spirit thereof.

## Claims

1. A remote control method of remote controlling a robot controller through a universal communication network by a terminal disposed remote from the robot controller, comprising:
enabling the terminal to remote control the robot controller by a functional connecting device which is disposed on a side of the robot controller, the functional connecting device being capable of enabling the terminal to remote control the robot controller through the universal communication network; and
performing a predetermined operation on the robot controller by the terminal.

2. The remote control method according to claim 1, wherein the step of enabling the terminal to remote control the robot controller is executed by sending a connect program from the functional connecting device to the terminal in response to a request made by the terminal.

3. The remote control method according to claim 1 further comprising a step of converting information of a format sent from the terminal to the robot controller into information of another format that can be processed by the robot controller by the functional connecting device.

4. The remote control method according to claim 1, wherein the step of performing the predetermined operation is executed by retrieving desired information from the robot controller through the functional connecting device by the terminal.

5. The remote control method according to claim 1, wherein operations performed by the terminal on the robot controller are limited.

6. The remote control method according to claim 4, wherein information retrievable from the robot controller by the terminal is limited.

7. A remote control system for remote controlling a robot controller through a universal communication network by a terminal disposed remote from the robot controller, comprising:
a functional connecting device disposed on a side of the robot controller, the functional connecting device being capable of enabling the terminal to remote control the robot controller through the universal communication network, the terminal performing a predetermined operation on the robot controller.

8. The remote control system according to claim 7, wherein the functional connecting device is provided with a connect program, the connect program being sent to the terminal in response to a request made by the terminal.

9. The remote control system according to claim 7, wherein the functional connecting device is capable of converting information of a format sent from the terminal to the robot controller into information of another format that can be processed by the robot controller.

10. The remote control system according to claim 7, wherein the terminal retrieves desired information from the robot controller through the functional connecting device by the predetermined operation.

11. The remote control system according to claim 7, wherein operations performed by the terminal on the robot controller are limited.

12. The remote control system according to claim 10, wherein information retrievable from the robot controller by the terminal is limited.

13. The remote control system according to claim 7, wherein the functional connecting device is included in the robot controller.
